# EUROPÄISCHE PATENTSCHRIFT

(11) **EP 1 868 934 B1**
(45) Veröffentlichungstag und Bekanntmachung des Hinweises auf die Patenterteilung: **26.01.2011**
(21) Anmeldenummer: 05821550.0
(22) Anmeldetag: 23.11.2005
(51) Int. Cl.: B66F 5/02, G01G 19/02, G01G 19/44

(54) **RADHEBER UND WAAGE MIT RADHEBER**
WHEEL SUSPENDER AND WEIGHING MACHINE COMPRISING A WHEEL SUSPENDER
DISPOSITIF DE LEVAGE DE ROUE ET BALANCE POURVUE D'UN TEL DISPOSITIF

(30) Priorität: 14.04.2005 DE 102005018279; 22.06.2005 DE 102005029203
(43) Veröffentlichungstag der Anmeldung: 26.12.2007
(73) Patentinhaber: Soehnle Professional GmbH & Co. KG, 71540 Murrhardt (DE)
(72) Erfinder: SCHMÜCKER, Volker, 56323 Waldesch (DE); SCHNURR, Michael, 71540 Murrhardt (DE)
(74) Vertreter: Hoffmann, Jürgen
(86) Internationale Anmeldenummer: PCT/EP2005/012501
(87) Internationale Veröffentlichungsnummer: WO 2006/108449

(56) Entgegenhaltungen:
- DE-A1- 4 200 033
- DE-A1- 19 930 414
- GB-A- 343 772
- GB-A- 888 694
- US-A- 4 692 082
- US-A- 5 346 354

## Beschreibung

Die vorliegende Erfindung betrifft einen Radheber mit einer Rampe und einer Hubvorrichtung, wobei die Hubvorrichtung derart angeordnet und aus-gebildet ist, dass mit der Hubvorrichtung ein Rad die Rampe hinauf oder herunter bewegbar ist , wobei die Hubvorrichtung eine Hebelvorrichtung aufweist. Des Weiteren betrifft die vorliegende Erfindung eine Bettenwaage, welche einen Radheber aufweist.

Bettenwaagen werden insbesondere zum Wiegen von Krankenbetten in den Fällen eingesetzt, in denen ein Patient zur Gewichtskontrolle aus Gründen seines Gesundheitszustandes das Bett nicht verlassen kann, so dass Bett und Patient zusammen gewogen werden müssen. Eine Bettenwaage weist üblicherweise für jedes Bein eines Bettes jeweils eine Wägvorrichtung auf, mit welcher die auf das jeweilige Bein wirkende Gewichtskraft des Bettes gemessen werden kann. Da die Bettenwaage gemäß der vorliegenden Erfindung insbesondere zur Gewichtsbestimmung eines Krankenhausbettes zusammen mit einem Patienten dient und ein Krankenhausbett üblicherweise an jedem Bein ein Rad aufweist, ist für jede Wägvorrichtung ein Radheber vorgesehen, um nämlich das Bein samt Rad anzuheben und die im angehobenen Zustand die auf die Wägvorrichtung wirkende anteilige Gewichtskraft des Bettes zu messen. Dementsprechend dient der Radheber zum Anheben und ggf. Fixieren des Rades in einer angehobenen Stellung, damit die anteilige Gewichtskraft des Bettes auf die Wägvorrichtung wirken kann.

Aus der zum Anmeldetag der vorliegenden Patentanmeldung noch nicht veröffentlichten Patentanmeldung DE 10 2005 029 203.8 der Anmelderin ist eine Bettenwaage mit einem Wägmodul bekannt, dessen diesbezügliche Wirkungsweise grundsätzlich zu der soeben geschilderten Wirkungsweise der Wägvorrichtung vergleichbar ist. Dort wird das Rad mit einer Hubeinrichtung auf eine Rampe geschoben, wobei die Hubeinrichtung ein Hubelement aufweist, welches durch eine in axialer Richtung verstellbare Einheit mit Selbsthemmung verstellbar ist. Die axial verstellbare Einheit kann beispielsweise eine Spindel mit Selbsthemmung aufweisen und mit einem elektromotorischen Antrieb, beispielsweise mittels eines Akkumulators gespeist, insbesondere mittels eines Akkuschraubers, angetrieben werden. Zur Vermeidung von Wiederholungen wird auf die DE 10 2005 018 279.8 verwiesen, deren gesamter Offenbarungsgehalt ausdrücklich hiermit einbezogen wird.

Aus GB 888,694 ist ein Radheber bekannt, der einen schwenkbar gelagerten Hebel aufweist, mit dem eine Kraft auf das zu hebende Rad ausgeübt werden kann, um das Rad auf eine Rampe zu rollen. Der Hebel wird mit Hilfe eines drehfest zu diesem, auf derselben Drehachse angeordneten Bedienhebel verschwenkt.

Der vorliegenden Erfindung liegt daher die Aufgabe zugrunde, einen Radheber und eine Bettenwaage anzugeben und weiterzubilden, welche eine im Wesentlichen gleichwirkende Alternative darstellt und ggf. einfacher zu handhaben oder kostengünstiger herzustellen ist.

Der erfindungsgemäße Radheber der eingangs genannten Art löst die voranstehende Aufgabe durch die Merkmale des Patentanspruchs 1. Demgemäß weist ein solcher Radheber eine Hebelvorrichtung auf, die einen Kniehebel (50; 51) oder eine Kniehebelanordnung (50, 51) umfasst.

Die Hubvorrichtung ist derart relativ zur Rampe angeordnet und ist derart ausgebildet, dass mit der Hubvorrichtung ein Rad die Rampe hinauf und/oder herunter bewegbar ist. Mit anderen Worten wird das Rad entlang der Rampe durch die Hubvorrichtung bewegt und hierbei angehoben, falls das Rad die Rampe hinaufrollt bzw. abgesenkt, falls das Rad die Rampe herunterrollt. Die Rampe könnte in Form einer schiefen Ebene ausgebildet sein und eine im Wesentlichen ebene Oberfläche aufweisen, auf welcher die Lauffläche des Rades bei der Bewegung auf der Rampe abrollt. Weiterhin könnte die Rampe relativ zur Hubvorrichtung derart an dem Radheber angeordnet sein, dass das Rad zwischen Rampe und Hubvorrichtung angeordnet ist. Bei Betätigung der Hubvorrichtung wird somit das Rad weg von der Hubvorrichtung und in Richtung der Rampe bewegt. Die Hubvorrichtung könnte allerdings auch bezüglich des Rades auf der Seite der Rampe angeordnet sein, wobei zumindest ein Ausleger der Hubvorrichtung auf der der Rampe abgewandten Seite des Rades vorgesehen ist und bei Betätigung der Hubvorrichtung derart auf das Rad einwirkt, dass das Rad auf die Rampe hinaufgezogen wird. Die Rampe könnte in Zusammenwirkung mit der Hubvorrichtung derart ausgebildet sein, dass die Hubvorrichtung das zu hebende Rad die Rampe hinauf und darüber hinaus schiebt, wenn beispielsweise an dem oberen Ende der Rampe einem muldenförmige Ausnehmung vorgesehen ist, in welcher das Rad fixierbar ist. Die Hubvorrichtung könnte Mittel aufweisen, mit welchen das Rad aus der muldenförmig Ausnehmung wieder heraus bewegt werden kann, so dass das Rad die Rampe herunterrollt und somit abgesenkt wird. Somit beruht der erfindungsgemäße Radheber auf dem Prinzip, dass das anzuhebende Rad zwischen einem Bauteil der Hubvorrichtung und der Rampe angeordnet ist und dass das Bauteil der Hubvorrichtung zumindest bezüglich einer Bewegungskomponente auf die Rampe hinzubewegt wird, wodurch das Rad die Rampe hinaufrollt und hierbei angehoben wird. Das Absenken des Rades erfolgte sinngemäß in umgekehrter Reihenfolge bzw. Richtung.

In einer ganz besonders bevorzugten Ausführungsform weist die Hubvorrichtung eine Hebelvorrichtung auf. Die Hebelvorrichtung dient zur Betätigung des Teils der Hubvorrichtung, welcher die Bewegung des Rades relativ zur Rampe bewirkt. Hierbei kann es sich um lediglich einen verschwenkbar angeordneten Hebel handeln, welcher in einer angehobenen Position des Rads arretierbar ist, zum Beispiel mittels einer Einrastvorrichtung. Bevorzugt weist die Hebelvorrichtung einen Kniehebel bzw. eine Kniehebelanordnung auf; ist also nicht nur ein Hebel, sondern es ist noch mindestens eine weitere Strebe oder ein weiteres Gelenkteil vorgesehen. Die Ausbildung des Kniehebels bzw. der Kniehebelanordnung hängt von der konkreten Ausbildung der Hubvorrichtung ab und wird anhand eines Beispiels in der Figurenbeschreibung weiter ausgeführt.

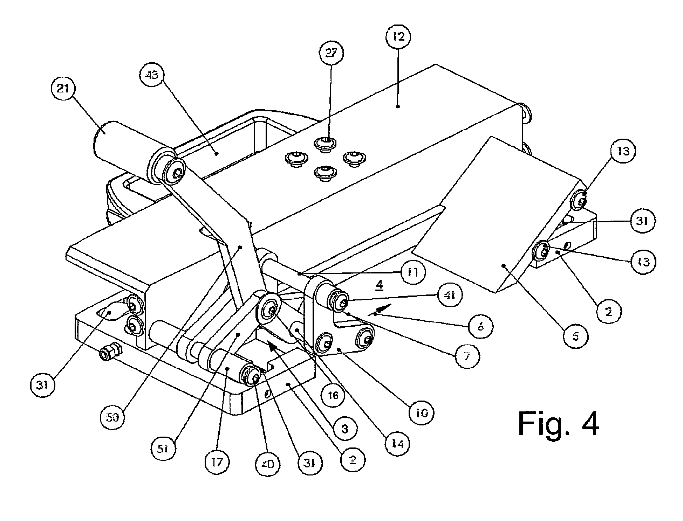

Ganz besonders bevorzugt ist die Hebelvorrichtung derart ausgebildet, dass in mindestens einem Betriebszustand der Hubvorrichtung eine Selbsthemmung vorliegt. Die Hebelvorrichtung könnte daher derart ausgelegt sein, dass eine Selbsthemmung dann vorliegt, wenn sich das Rad in einer angehobenen Stellung befindet. Unter einer Selbsthemmung im Sinn der vorliegenden Erfindung ist insbesondere eine Ausbildung der Hebelvorrichtung derart zu verstehen, dass in dem selbstgehemmten Zustand der Hebelvorrichtung und der gegebenenfalls vorgesehenen gelenkigen Verbindungen von Streben der Hebelvorrichtung derart zueinander angeordnet sind, dass die von dem Rad auf die Hebelvorrichtung wirkenden Kräfte ein Absenken des Rads verhindern. Somit liegt ein stabiler Zustand der Hebelvorrichtung des Radhebers - vergleichbar einem "mechanischen Potentialtopf" - vor, in den die Hebelvorrichtung durch entsprechende Kraftaufwendung verbracht werden kann, um das Rad anzuheben. In diesem Zustand befindet sich das Rad in einem angehobenen Zustand, vorausgesetzt, die Hebelvorrichtung des Radhebers ist entsprechend ausgebildet bzw. ausgelegt. Hierauf wird im Rahmen eines Ausführungsbeispiels mit der Figurenbeschreibung, insbesondere zu Fig. 4, weiter eingegangen.

In diesem Zusammenhang könnte die Hebelvorrichtung auch derart ausgebildet sein, dass sie durch Überstreckung des Kniehebels in einer Selbsthemmungsstellung fixierbar ist. Auch hierzu wird anhand eines Ausführungsbeispiels mit der Figurenbeschreibung, insbesondere gemäß Fig. 4, näher eingegangen. Die Hebelvorrichtung ist bevorzugt derart ausgebildet, dass sie aus ihrer fixierten Stellung wieder gelöst werden kann, beispielsweise durch die Betätigung des Hebels.

In einer Ausführungsform der Hubvorrichtung ist diese rein mechanisch durch einen Bediener betätigbar, und zwar derart, dass der Bediener den Hebel auslenkt, beispielsweise durch Niederdrücken des Hebels mit dem Fuß. Somit muss der Bediener die zum Anheben des Rads erforderliche Kraft aufbringen, was dadurch erleichtert werden kann, dass der Hebel bzw. die mechanisch ausgebildete Hubvorrichtung eine günstige Kraftübersetzung hierfür aufweist und daher relativ leicht zu betätigen ist.

Es könnte jedoch vorgesehen sein, dass die Hubvorrichtung einen Motorantrieb aufweist. So könnte beispielsweise als Motorantrieb ein Elektromotor vorgesehen sein, welcher mit seinem Rotor über ein Übersetzungsgetriebe mit einer Spindel zusammenwirkt und durch Drehen der Spindel die Hubvorrichtung bzw. einen Hebel der Hubvorrichtung auslenkt, so dass hierdurch das Rad motorisch angehoben werden kann.

Es wäre auch denkbar, dass die Hubvorrichtung einen Kurbelantrieb aufweist. Durch manuelles Drehen einer Kurbel kann die Hubvorrichtung bzw einen Hebel der Hubvorrichtung auslenkt werden, so dass das Rad angehoben werden kann. Die Kurbel selbst könnte abnehmbar an dem Radheber adaptierbar sein. Weiterhin könnte die Kurbel in Zusammenwirkung mit dem Gehäuse des Radhebers derart ausgebildet sein, dass die Kurbel an dem Gehäuse in einer vorgebbaren Stellung reversibel arretierbar ist, beispielsweise durch Umknicken der Kurbel an einem Knickgelenk und durch Einrasten an einer hierfür am Gehäuse des Radhebers vorgesehenen Ausnehmung. Dies könnte dann erfolgen, wenn das Rad sich in einer angehobenen Stellung befindet.

Zusätzlich oder alternativ könnte die Hubvorrichtung einen hydraulischen oder einen pneumatischen Antrieb aufweisen. Der hydraulische oder pneumatischen Antrieb könnte beispielsweise eine Pumpe aufweisen, die manuell (vergleichbar einer Luftpumpe oder Kolbenpumpe) oder elektrisch (mit einem Elektromotor) angetrieben werden könnte. Es ist auch denkbar, dass der hydraulische oder pneumatische Antrieb des Radhebers an ein Hydraulik- bzw. Pneumatikkreislaufsystem anschließbar ist, beispielsweise über mindestens eine entsprechend vorgesehene Schnellkupplung. In diesem Fall könnte an dem Radheber ein entsprechendes Ventil vorgesehen sein, mit welchem unter Druck stehende Flüssigkeit bzw. unter Druck stehendes Gas dem Hydraulik- bzw. Pneumatikkreislaufsystem entnehmbar und einer Kolbenanordnung des hydraulischen oder pneumatischen Antriebs des Radhebers zuführbar ist. Es könnte weiterhin vorgesehen sein, dass ein weiteres Ablassventil vorgesehen ist oder dass das Ventil eine Position aufweist, in welcher Hydraulikflüssigkeit an das Hydraulikkreislaufsystem wieder abgegeben werden kann, um es einem Tank des Hydraulikkreislaufsystems zurückzuführen.

Die Hubvorrichtung könnte einen Gewindetrieb aufweisen. Der Gewindetrieb könnte mit einer Kurbel, einem motorischen, hydraulischen oder pneumatischen Antrieb zusammenwirken und somit auf Grund eines hohen Übersetzungsverhältnisses eine leichtgängige Betätigung der Hubvorrichtung ermöglichen. Dementsprechend wird die Gewindesteigung des Gewindetriebs bevorzugt derart gewählt, dass ein günstiges Übersetzungsverhältnis für die jeweilige Antriebsart erzielbar ist.

Ganz besonders bevorzugt ist vorgesehen, dass die Hubvorrichtung an der Lauffläche des zu hebenden Rades angreift. Hierzu könnte die Hubvorrichtung eine Drehhülse und/oder ein Schubrad aufweisen, die bzw. das bei einem Hubvorgang auf der Lauffläche des zu hebenden Rades abrollt. Hierdurch wird verhindert, dass das Rad bei dem Hubvorgang blockiert, da die Hubvorrichtung bzw. die Drehhülse und/oder das Schubrad üblicherweise auf der der Rampe abgewandten Seite des Rads an dessen Lauffläche angreift. Das Rad kann vielmehr einerseits die Rampe hinaufrollen bzw. herunterrollen und andererseits mit sehr geringer Reibung an der Drehhülse bzw. dem Schubrad der Hubvorrichtung abrollen.

Weiterhin könnte das Rad die Rampe hinauf- bzw. hinabbewegt werden, indem ganz allgemein das Rad zwischen der Rampe und der Hubvorrichtung angeordnet ist und sich zumindest eine Komponente der Hubvorrichtung auf die Rampe hinzubewegt. So könnte beispielsweise die Hubvorrichtung ihrerseits eine Rampe aufweisen, welche eine der Rampe des Radhebers im Wesentlichen entgegengesetzt ausgerichtete Steigung aufweist, so dass die Rampe des Radhebers und die Rampe der Hubvorrichtung im Wesentlichen V-fömig zueinander ausgerichtet sind. Wenn die Rampe der Hubvorrichtung in Richtung der Rampe des Radhebers bewegt wird, wird hierdurch das Rad nach oben "gedrückt". Damit das Rad bei dem Hubvorgang nicht blockiert bzw. Reibungsverluste entstehen, könnten zumindest bei einer der zwei Rampen Drehhülsen oder Gleitrollen vorgesehen sein, auf welchen das Rad abrollen kann. Es ist auch denkbar, beide Rampen aufeinander zu zu bewegen, wenn hierfür eine entsprechende Mechanik am Radheber vorgesehen ist.

In einer alternativen Ausführungsform könnte die Hubvorrichtung an der Achse des zu hebenden Rades angreifen. Hierzu könnte die Hubvorrichtung ein gabelförmiges Bauteil aufweisen, welches in Eingriff mit mindestens einem an der Achslagerung des Rades vorgesehenen Vorsprung oder mit der verlängert ausgeführten Achse des Rades (ggf, auf beiden Seiten des Rads) kommen kann. Daher könnte die Hubvorrichtung derart ausgebildet sein, dass bei deren Betätigung das Rad einerseits entlang der Rampe bewegt wird und hierbei zumindest mit einer Gewichtskomponente auf der Rampe abrollt und andererseits die verbleibende Gewichtskomponente von der Hubvorrichtung zur Hubbewegung aufgebracht wird. Es wäre auch denkbar, dass die Hubvorrichtung derart ausgebildet ist, dass sie mit einem mit der Achse des Rads oder mit einem an der Achslagerung des Rades vorgesehenen Vorsprung in Eingriff kommenden Bauteil das Rad in Richtung der Rampe bewegbar bzw, ziehbar ist, so dass das Rad hierdurch auf die Rampe hinaufgezogen wird, um das Rad anzuheben.

Insbesondere wenn der Radheber für eine Bettenwaage eingesetzt wird, ist in einer ganz besonders bevorzugten Ausführungsform vorgesehen, dass der Radheber zumindest einen Gleitfuß und/oder zumindest ein Rad zum Verschieben des Radhebers relativ zum Untergrund aufweist. Hierdurch kann verhindert werden, dass beim Anheben der Bettenbeine samt der jeweiligen Räder Verspannungen der einzelnen Radheber untereinander auftreten, die einem Hubvorgang des Bettes entgegenwirken. Hierdurch kann das Bett auch noch in einem angehobenen Zustand verfahren bzw. transportiert werden, und zwar ohne die Radheber zu entfernen, falls nämlich ein Patient in einem Krankenbett notfallbedingt in einen Operationsraum verlegt werden muss. Gleitfuß oder Rad könnten feststellbar sein, so dass das Krankenbett nicht unbeabsichtigt wegrollt. Eine solche Feststellung könnte mit einem Bauteil der Hubvorrichtung dann erfolgen, wenn diese in einem Zustand ist, in welchen das Rad angehoben ist.

In einer weiteren Ausführungsform könnte die Rampe einen Abschnitt zur Aufnahme bzw. Fixierung des Rades aufweisen. So könnte beispielsweise ein oberer Rampenabschnitt muldenförmig ausgebildet sein. Die Rampe könnte auch einen oberen, nahezu waagerecht oder schräg abfallend ausgebildeten Abschnitt und einen Anschlag für das Rad aufweisen, in welchen das Rad in seiner angehobenen Stellung verbracht werden kann und dort hierdurch fixiert ist. Es wäre auch denkbar, dass zumindest ein Teil der Rampe um eine Achse verschwenkbar angeordnet ist, so dass die Rampe bei dem Hubvorgang zunächst eine Funktion einer schiefen Ebene aufweist, welche das Rad hinaufrollt. Sobald das Rad die Schwenkachse der Rampe passiert hat, schwenkt die Rampe um die Achse in eine Arretierungsstellung, so dass das Rad in dem angehobenen Zustand arretiert wird ("Wippenfunktion" der Rampe). Die Hubvorrichtung könnte in diesem Zusammenhang derart ausgebildet sein, dass das Rad aus einer angehobenen und fixierten/arretierten Stellung wieder herausbewegbar ist, so dass es die Rampe herunterrollen kann und somit abgesengt wird.

Ganz besonders bevorzugt ist der Radheber Teil einer Waage, mit welcher Rad-oder Achslasten eines mindestens ein Rad aufweisenden Gegenstands gewogen werden kann. Ein solcher Gegenstand könnte beispielsweise ein Fahrzeug, ein Anhänger oder ein Bett, insbesondere ein Krankenhausbett, aufweisen. In letzterem Fall handelt es sich bei der Waage um eine Bettenwaage.

Bezüglich einer Bettenwaage wird die eingangs genannte Aufgabe durch die Merkmale des Patentanspruchs 16 gelöst. Demgemäß weist eine Bettenwaage zumindest einen Radheber nach einem der Patentansprüche 1 bis 15 auf, so dass zur Vermeidung von Wiederholungen auf den vorangegangenen Teil der Beschreibung verwiesen wird.

In einer ganz besonders bevorzugten Ausführungsform weist die Bettenwaage mehrere Wägvorrichtungen auf. Hierbei könnte für jedes Bein des Bettes jeweils eine Wägvorrichtung vorgesehen sein. Die Bettenwaage könnte also im Konkreten vier Wägvorrichtungen aufweisen.

Zumindest eine - und ganz besonders bevorzugt jede - Wägvorrichtung könnte einen Radheber aufweisen. Insoweit kann eine Wägvorrichtung, nachdem das Rad eines Beins des Bettes mit dem Radheber angehoben wurde, dessen Gewichtsanteil bestimmen.

Damit das gesamte Gewicht des Bettes mit einem Patienten und nicht nur der auf ein Bein des Bettes wirkende Gewichtsanteil bestimmt werden kann, sind bevorzugt mehrere Wägvorrichtungen zum Wiegen des Krankenbettes - ganz allgemein eines Gegenstandes - miteinander vernetzt. Diese Vernetzung könnte mit einer Kabelverbindung zwischen jeweils einer Wägvorrichtung und einer Verarbeitungsbeziehungsweise einer Auswerteeinrichtung verbunden sein. Hierbei handelt es sich um eine sternförmige Vernetzung in Bezug auf die Verarbeitungs- bzw. Auswerteeinrichtung. Die einzelnen Wägvorrichtungen könnten auch untereinander vernetzt sein, wobei lediglich von einer Wägvorrichtung eine Kabelverbindung zu einer Verarbeitungs-/Auswerteeinrichtung vorgesehen ist (ringförmige Vernetzung). Über eine solche Kabelverbindung könnte beispielsweise auch ein Elektromotor eines Radhebers über eine eigene elektrische Leitung mit elektrischer Energie versorgt werden.

Besonders bevorzugt erfolgt die Vernetzung jeweils einer Wägvorrichtung mit einer Verarbeitungs- beziehungsweise Auswerteeinrichtung kabellos. Hierbei weist eine Wägvorrichtung einen Sender auf, welcher Signale sendet, die den auf die Wägvorrichtung wirkenden Gewichtsanteil repräsentieren. Die Verarbeitungs- bzw. Auswerteeinrichtung weist einen Empfänger auf, welcher die von dem Sender der Wägvorrichtung gesendeten Signale empfängt. Die Verarbeitungs- bzw. Auswerteeinrichtung könnte auch einen Sender aufweisen, mit welchem nämlich ein Anforderungssignal abgesetzt wird, welches von jeweils einem in den Wägvorrichtungen vorgesehenen Empfängern empfangen werden kann. Durch das Anforderungssignal ausgelöst könnten die Wägvorrichtungen nahezu zeitgleich einen Wiegevorgang durchführen und das jeweilige Ergebnis an die Verarbeitungs- bzw. Auswerteeinrichtung senden. Sowohl Sender als auch Empfänger der einzelnen Wägvorrichtungen bzw. die Verarbeitungs- bzw. Auswerteeinrichtung senden auf einer spezifischen Frequenz oder mit einer spezifischen Kennung, damit der Wiegevorgang nicht durch Sendesignale anderer Wägvorrichtungen einer anderen Bettenwaage gestört wird, die sich unter Umständen in dem gleichen Raum befinden.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1: eine schematische Darstellung eines Krankenbettes, dessen Räder jeweils von einer Wägvorrichtung einer Bettenwaage aufgenommen sind,
- Fig. 2: ein Ausführungsbeispiel einer Wägvorrichtung in einer perspektivischen Ansicht, welche einen erfindungsgemäßen Radheber aufweist,
- Fig. 3: eine Draufsicht der Wägvorrichtung aus Fig. 2,
- Fig. 4: eine perspektivische Ansicht der Wägvorrichtung aus Fig. 2 bei abgenommener Abdeckhaube,
- Fig. 5: eine Seitenansicht der Wägvorrichtung aus Fig. 2, gesehen aus der Richtung der Pfeile V-V aus Fig. 3,

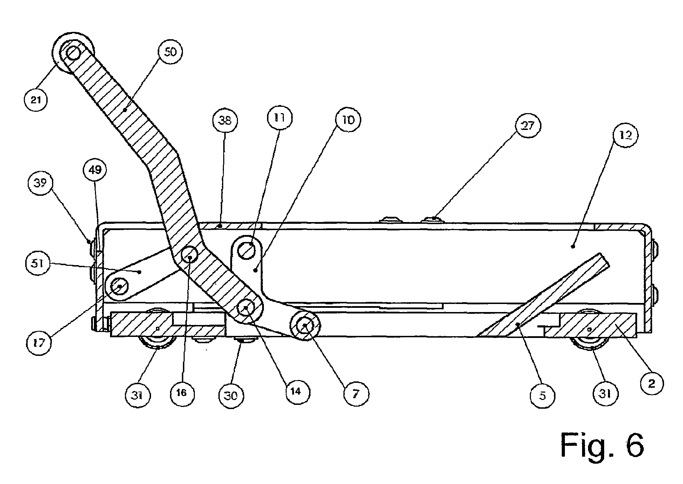

- Fig. 6: eine Schnittansicht entlang der Pfeile VI-VI aus Fig. 3,
- Fig. 7: eine Schnittansicht entlang der Pfeile VII-VII aus Fig. 3 und
- Fig. 8: eine schematische Darstellung eines weiteren Ausführungsbeispiels einer Bettenwaage.

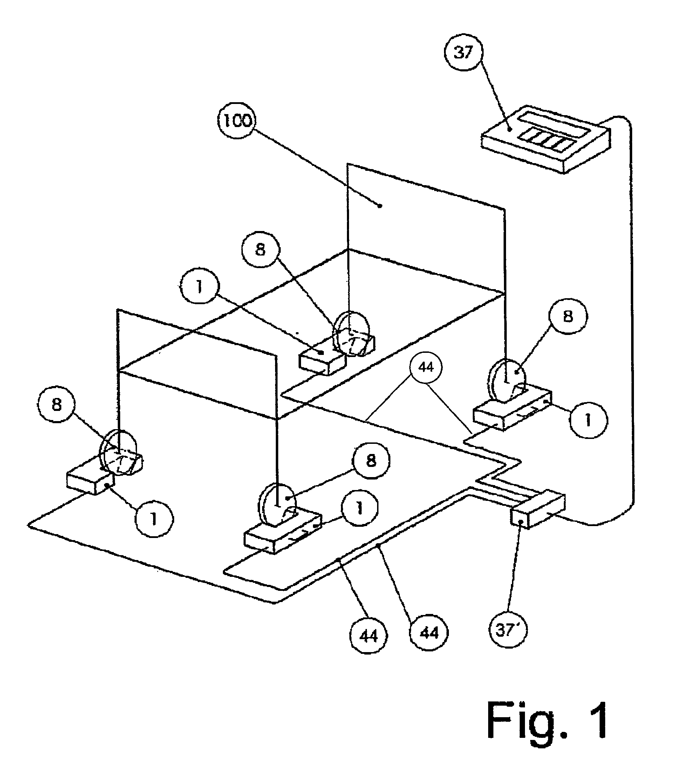

Gleiche oder ähnliche Bauteile sind in den Figuren mit denselben Bezugszeichen gekennzeichnet. Fig. 1 zeigt in einer schematischen Darstellung, wie die Räder 8 eines Krankenbettes 100 von Wägvorrichtungen 1 aufgenommen sind. Jede Wägvorrichtung 1 erzeugt Messsignale, die den auf ihnen lastenden Gewichtsanteil des Krankenbettes 100 repräsentieren. Diese Signale gelangen über die Leitungen 44 an den Verbindungskasten 37' und werden dort zusammengeführt. Das zusammengeführte Signal wird an die Auswerteeinrichtung 37 weitergeleitet, die das Gewicht anzeigt, welches insgesamt auf den Wägvorrichtungen 1 der Bettenwaage lastet. Die in Flg. 1 gezeigte Wägvorrichtungen 1 weisen jeweils einen elektrischen Antrieb (nicht gezeigt) auf, mit welchen jeweils ein Rad 8 angehoben werden kann. Die Versorgung des elektrischen Antriebs einer Wägvorrichtung 1 mit elektrischem Strom wird ebenfalls über die Leitung 44 realisiert.

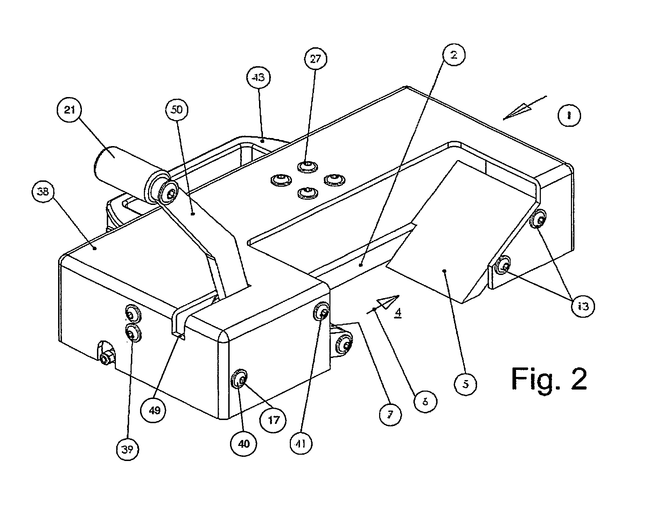

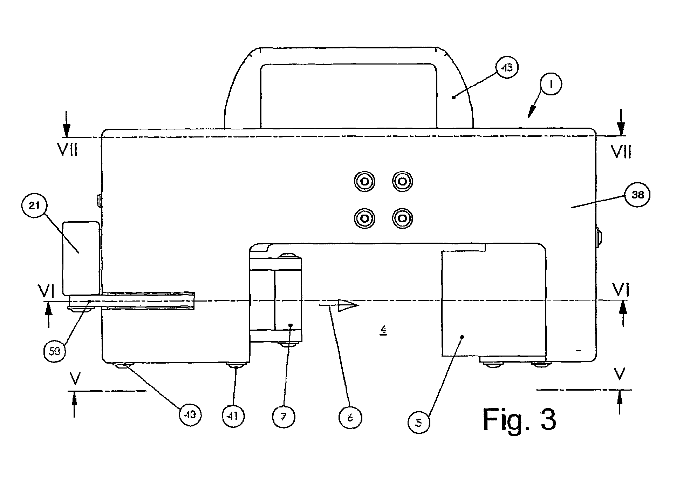

Fig. 2 zeigt in einer perspektivischen Darstellung eine Wägvorrichtung 1, welche im Wesentlichen U-förmig ausgebildet ist, um mit der Ausnehmung 4 ein Rad 8 aufnehmen zu können. Die U-förmige Ausbildung des Wägmoduls 1 ist in der Aufsicht-Darstellung des Wägvorrichtung 1 aus Fig. 3 ebenfalls erkennbar. Auf der einen Seite der Ausnehmung 4 ist eine Rampe 5 vorgesehen. Auf der gegenüberliegenden Seite ist eine in Richtung des Pfeils 6 zur Rampe 5 hin bewegbare Rolle bzw. Drehhülse 7 vorgesehen.

Zum Wiegen eines Krankenbettes 100 wird jeweils eine Wägvorrichtung 1 mit seiner Ausnehmung 4 um ein Rad 8 des Krankenbettes 100 platziert. Dann wird die Drehhülse 7 in Richtung des Pfeils 6 verschoben, so dass das Rad 8 auf die Rampe 5 aufgeschoben wird, bis es vom Boden angehoben wird.

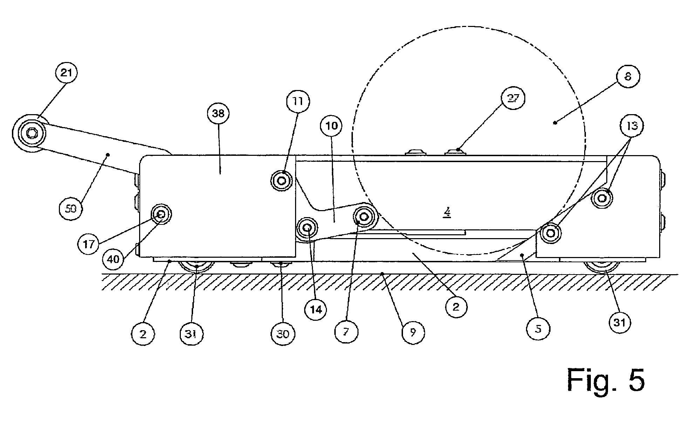

Fig. 4 zeigt in einer perspektivischen Ansicht die Wägvorrichtung 1 aus den Fig. 2 und 3, jedoch ohne Abdeckhaube 38. Fig. 4 ist entnehmbar, dass die Rampe 5 selbst stehen zwei Schrauben 13 der Platte 12 befestigt ist. Die Platte 12 weist einen im Wesentlichen L-förmigen Querschnitt auf. An der Platte 12 ist die Hubvorrichtung 3 angeordnet. Die Hubvorrichtung 3 weist eine Hebelvorrichtung auf, welche einen Hebel 50, eine Doppelstrebe 51 und einem Ausleger 10 umfasst. Die Doppelstrebe 51 ist mit ihrem einen Ende um eine durch die Schraube 40 definierte Achse 17 drehbar gelagert. Mit ihrem anderen Ende ist die Doppelstrebe 51 mittels einer durch eine Schraubenverbindung definierte Achse 16 zu dem Hebel 50 verdrehbar angeordnet. Der Hebel 50 ist mit seinem einen Ende drehbar um die durch eine Schraubverbindung gebildete Achse 14 mit dem Ausleger 10 verbunden. Das andere Ende des Hebels 50 weist ein Griffteil 21 auf, mit welchem der Hebel 50 aus der in Fig. 4 gezeigten Stellung nach unten gedrückt werden kann, und somit in eine Stellung verbracht werden kann, welche in Fig. 5 gezeigt ist. Dies kann beispielsweise mit dem Fuß eines Bedieners erfolgen.

Der Ausleger 10 ist um die Achse 11 drehbar angeordnet und mittels der Schraube 41 an der Platte 12 befestigt. Durch die Anordnung des Hebels 50, der Doppelstrebe 51 und des Auslegers 10 und die jeweiligen Drehachsen 17, 16, 14 und 11 ist ein Gelenkviereck gebildet, mit welchem der Ausleger 10 aus seiner in Fig. 4 gezeigten Stellung in Pfeilrichtung 6 und schräg nach oben bewegbar ist, falls der Hebel 50 aus seiner in Fig. 4 gezeigten Stellung nach unten bewegt wird. Hierdurch kann in besonders vorteilhafter Weise einfach und allein mechanisch betätigbar ein In Fig. 4 nicht gezeigtes Rad schräg die Rampe 5 aufwärts bewegt und somit angehoben werden. Die in Fig. 4 gezeigte Hebelvorrichtung weist eine Kniehebelanordnung auf, welche durch die Doppelstrebe 51 und den Hebel 50 gebildet ist. In diesem Zusammenhang hat der zwischen den Achsen 16 und 14 befindliche Teil des Hebels 50 die Funktion eines Kniehebels.

Das durch die Drehachsen 17, 16, 14 und 11 gebildete Gelenkviereck ist weiterhin derart ausgebildet, dass mit der Hebelvorrichtung eine Selbsthemmung bzw. Arretierung möglich ist, falls der Hebel 50 sich in der unteren Position befindet und demgemäß der Ausleger 10 sich in der in Fig. 5 gezeigten Position befindet. In dieser Position der Hebelvorrichtung befindet sich das am Rad 8 in der angehobenen Stellung. Demgemäß wirkt die Gewichtskraft des Beins des Krankenhausbettes 100 über das Rad 8 einerseits auf die Rampe 5 und andererseits auf die Drehhülse 7 des Auslegers 10. Da jedoch eine Gewichtskomponente auch auf den Ausleger 10 wirkt und der Hebel 50 in seiner unteren - z.B. in Fig. 5 gezeigten - Position angeordnet ist, ist demgemäß auch die Achse 16 zwischen Hebel 50 und Doppelstrebe 51 in einer unteren Position angeordnet. Auf Grund der in dieser Position der Hebelvorrichtung vorliegenden Anordnung der Achsen 17, 11, 16 und 14 des Gelenkvierecks ist der Ausleger 10 in seiner oberen Positionen fixiert, da die Hebelvorrichtung sich in einer selbsthemmenden Stellung befindet. Diese Selbsthemmung wird durch Überstreckung des als Kniehebel wirkenden Hebels 50 in Verbindung mit der Doppelstrebe 51 erzielt, nämlich dadurch, dass die Achse 16 in der selbsthemmenden Stellung unterhalb der Verbindungslinie zwischen den Achsen 17 und 14 angeordnet ist. Da der Hebel 50 in der unteren Position auf der Achse 17 bzw. der Schraube 40 oder an den Gehäuseteil 49 in dem Bereich zwischen der Doppelstrebe 51 aufliegt, ist hierdurch auch seine diesbezügliche Endposition festgelegt. Die auf den Ausleger 10 und somit auf das Gelenkviereck mit den Achsen 17, 16, 11 und 14 wirkende Gewichtskraft des angehobenen Rades 8 bewirkt, dass der Hebel 50 und somit die Hebelvorrichtung in dieser Position verbleiben, auch wenn die auf die Wägvorrichtung 1 wirkende Gewichtskraft deutlich erhöht werden sollte. Der Ausleger 10 ist demgemäß nur dann wieder in seine untere Position verbringbar, wenn der Hebel 50 aus seiner in Fig. 5 gezeigten unteren Position aktiv und mit entsprechendem Kraftaufwand wieder in die in Fig. 4 gezeigte Position verbracht wird.

Insoweit weist die Hebelvorrichtung einen "mechanischen Potenzialtopf" auf, da zunächst eine Kraft aufzuwenden ist, um den Hebel 50 aus der in Fig. 4 gezeigten oberen Positionen nach unten auszulenken und somit das Rad 8 und die damit verbundene Last schräg nach oben auf die Rampe 5 zu rollen. Sobald eine Zwischenposition des Hebels 50 überschritten ist, wird dieser in seiner untere, in Fig. 5 gezeigte Position ebenfalls unter der Wirkung der mit dem Rad 8 verbundenen Last verbracht, so dass die Hebevorrichtung sich in einem stabilen Zustand befindet. Zum Verbringen des Hebels 50 in die in Fig. 4 gezeigte obere Stellung ist der Hebel 50 unter Kraftaufwand etwas anzuheben, wobei das Rad 8 zunächst ein wenig weiter angehoben wird, bis dann der Hebel 50 auch unter der Kraftwirkung des Rades 8 in die obere Position bewegbar ist, so dass der Ausleger 10 bzw. die Drehhülse 7 sich in die untere Position verbringen lassen und das Rad 8 von der Wägvorrichtung 1 freigebbar ist.

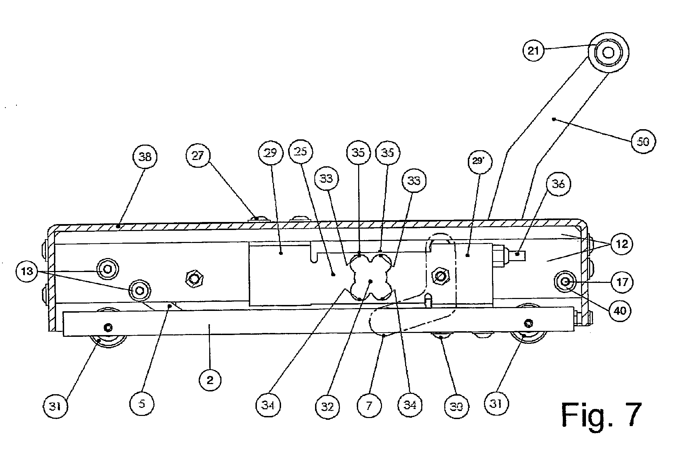

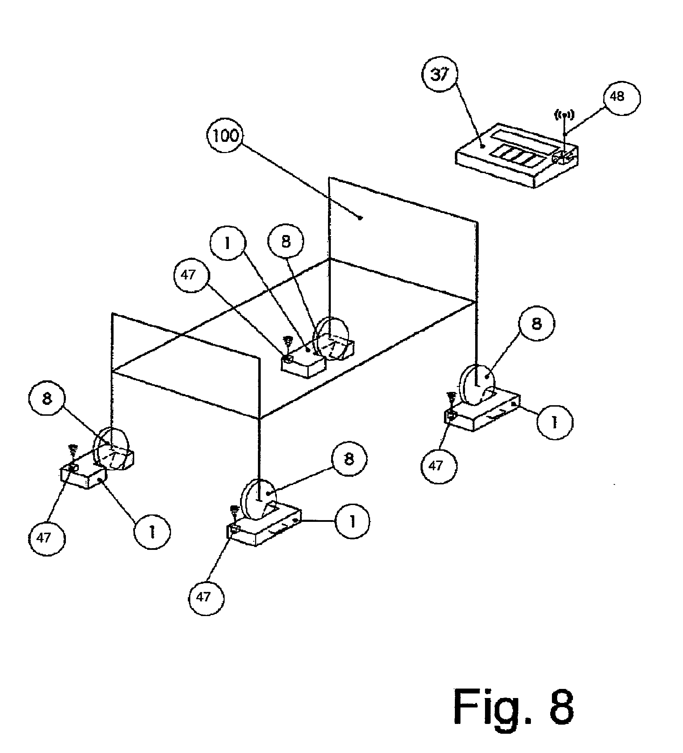

In einem angehobenen Zustand des Rades 8 ruht somit das Gewicht des Rades 8 und somit des Beines des Krankenbettes 100 auf der Rampe 5 und der Drehhülse 7 des Auslegers 10 und somit an der Platte 12 bzw. an der Abdeckhaube 38. Die Platte 12 und die Abdeckhaube 38 sind über das Messelement 25 mit der Bodenplatte 2 verbunden. Fig. 7 ist entnehmbar, dass die Platte 12 und die Abdeckhaube 38 mittels den Schrauben 27 mit dem linken Teil 29 des Messelements 25 verbunden ist. Der rechte Teil 29' des Messelements 25 ist mit der Bodenplatte 2 mittels der Schrauben 30 verbunden. Das Messelement 25 weist eine Ausnehmung 32 auf, die im Wesentlichen die Form eines vierblättriges Kleeblatts aufweist. Dementsprechend sind oben und unten in der Ausnehmung 32 zwei Sollbiegestellen 33, 33 und 34, 34 gebildet. An den Sollbiegestellen 33 sind Dehnmessstreifen 35 angebracht, deren elektrischer Widerstand sich bei Dehnung infolge einer Verbiegung der Sollbiegestelle 33 ändert, so dass daraus ein der auf die Wägvorrichtung 1 wirkende Last abhängiges elektrisches Signal abgeleitet werden kann. Dieses elektrische Signal kann entsprechend den in Fig. 1 gezeigten Leitungen 44 oder kabellos entsprechend den in Fig. 8 gezeigten Sendern/Empfängern 47, 48 der Auswerteeinrichtung 37 übermittelt werden, wo das Gewicht des zu wiegenden Gegenstands angezeigt und/oder abgespeichert und/oder ausgedruckt werden kann.

Die Betriebsweise der Bettenwaage ist folgendermaßen: die Wägvorrichtungen 1 werden mit Hilfe des Griffs 43 von einem Bediener nacheinander seitlich unter die Räder 8 des Krankenbettes 100 geschoben, so dass der in den Fig. 1 oder 8 gezeigte Zustand vorliegt. Sodann wird bei jeder Wägvorrichtung 1 der Hebel 50 nach unten gedrückt, wodurch jeweils der Ausleger 10 und die Drehhülse 7 das Rad 8 auf die Rampe 5 aufschieben. Eine Wägvorrichtung 1 kann vor dem Anheben des Rades 8 nahezu in einer beliebigen Stellung relativ zu einem Rad 8 angesetzt werden, da beim Hubvorgang des Rades 8 einerseits eine Selbstzentrierung der Wägvorrichtung 1 relativ zum Rad 8 erfolgt. Dies ist aufgrund der an der Bodenplatte 2 vorgesehenen Rollen 31 möglich, mit welchen die gesamte Wägvorrichtung 1 relativ zum Untergrund 9 bewegbar ist. Hierdurch ist andererseits auch ein Verspannen der Wägvorrichtungen 1 untereinander beim Auffahren der Räder 8 auf die Rampen 5 wirksam verhindert.

Mit den Schrauben 39 ist die Abdeckhaube 38 seitlich an dem sich vertikal erstreckenden Teil der Platte 12 befestigbar. Der Leitungsanschluss 36 dient zum Anschließen von Leitungen an eine Auswerteeinrichtung, wie das beispielsweise in Fig. 1 mit den Leitungen 44 an eine Auswerteeinrichtung 37 gezeigt ist.

Abschließend sei ganz besonders darauf hingewiesen, dass die voranstehend erörterten Ausführungsbeispiele lediglich zur Beschreibung der beanspruchten Lehre dienen, diese Jedoch nicht auf die Ausführungsbeispiele einschränken.

### Bezugszeichenliste

- 100: Krankenbett
- 1: Wägvorrichtung
- 44: Leitungen
- 8: Rad
- 37': Verbindungskasten
- 37: Auswerteeinrichtung
- 4: Ausnehmung
- 5: Rampe
- 6: Pfeil
- 7: Drehhülse
- 38: Abdeckhaube
- 13: Schraube
- 12: Platte
- 3: Hubvorrichtung
- 50: Hebel
- 51: Doppelstrebe
- 10: Ausleger
- 40: Schraube
- 17: Achse
- 16: Achse
- 14: Achse
- 21: Griffteil von (50)
- 11: Achse
- 41: Schraube
- 49: Gehäuseteil
- 25: Messelement
- 2: Bodenplatte
- 27: Schrauben
- 29: linker Teil von (25)
- 29': rechter Teil von (25)
- 30: Schrauben
- 32: Ausnehmung von (25)
- 33: Sollbiegestelle
- 34: Sollbiegestelle
- 35: Dehnmessstreifen
- 47: Sender/Empfänger
- 48: Sender/Empfänger
- 43: Griff
- 31: Rolle
- 39: Schraube
- 36: Leitungsanschluss

## Patentansprüche

1. Radheber mit einer Rampe (5) und einer Hubvorrichtung (3), wobei die Hubvorrichtung (3) derart angeordnet und ausgebildet ist, dass mit der Hubvorrichtung (3) ein Rad (8) die Rampe (5) hinauf oder herunter bewegbar ist, wobei die Hubvorrichtung (3) eine Hebelvorrichtung aufweist, **dadurch gekennzeichnet, dass** die Hebelvorrichtung einen Kniehebel (50; 51) oder eine Kniehebelanordnung (50, 51) umfasst.

2. Radheber nach Anspruch 1, **dadurch gekennzeichnet, dass** die Hebelvorrichtung derart ausgebildet ist, dass in mindestens einem Betriebszustand eine Selbsthemmung vorliegt und/oder dass die Hebelvorrichtung durch Überstreckung des Kniehebels (50; 51) oder der Kniehebelanordnung (50, 51) in einer Selbsthemmungsstellung - vorzugsweise wieder lösbar - fixierbar ist.

3. Radheber nach einem der Ansprüche 1 bis 2, **dadurch gekennzeichnet, dass** die Hubvorrichtung einen Motorantrieb aufweist und/oder dass die Hubvorrichtung einen Kurbelantrieb aufweist und/oder dass die Hubvorrichtung einen hydraulischen oder pneumatischen Antrieb aufweist und/oder dass die Hubvorrichtung einen Gewindetrieb aufweist.

4. Radheber nach einem der Ansprüche 1 bis 3, **dadurch gekennzeichnet, dass** die Hubvorrichtung an der Lauffläche des zu hebenden Rades (8) angreift und/oder dass die Hubvorrichtung (3) an der Achse des zu hebenden Rades (8) angreift.

5. Radheber nach Anspruch 4, **dadurch gekennzeichnet, dass** die Hubvorrichtung (3) eine Drehhülse (7) und/oder ein Schubrad aufweist, die bzw. das bei einem Hubvorgang auf der Lauffläche des zu hebenden Rades (8) abrollt.

6. Radheber nach einem der Ansprüche 1 bis 5, **dadurch gekennzeichnet, dass** der Radheber zumindest einen Gleitfuß und/oder zumindest ein Rad (31) zum Verschieben des Radhebers relativ zum Untergrund (9) aufweist.

7. Radheber nach einem der Ansprüche 1 bis 6, **dadurch gekennzeichnet, dass** die Rampe (5) einen - vorzugsweise muldenförmig ausgebildeten - Abschnitt zur Aufnahme des Rades (8) aufweiset und/oder dass zumindest ein Teil der Rampe (5) um eine Achse verschwenkbar angeordnet ist.

8. Radheber nach einem der Ansprüche 1 bis 7, **dadurch gekennzeichnet, dass** der Radheber Teil einer Waage ist, insbesondere einer Bettenwaage.

9. Bettenwaage mit zumindest einem Radheber nach einem der Ansprüche 1 bis 8.

10. Bettenwaage nach Anspruch 9, **gekennzeichnet durch** mehrerevorzugsweise vier-Wägvorrichtungen (1) - vorzugsweise für jedes Bein des Bettes jeweils eine Wägvorrichtung (1) - vorgesehen sind.

11. Bettenwaage nach Anspruch 10, **dadurch gekennzeichnet, dass** jede Wägvorrichtung (1) einen Radheber aufweist.

12. Bettenwaage nach einem der Ansprüche 10 oder 11, **dadurch gekennzeichnet, dass** mehrere Wägvorrichtungen (1) zum Wiegen eines Gegenstandes - vorzugswelse kabellos - miteinander vernetzt sind und/oder dass die Wägvorrichtungen (1) - vorzugsweise kabellos - an eine Verarbeitungseinrichtung (37) angeschlossen sind.

## Claims

1. Wheel suspender with a ramp (5) and a lifting device (3), wherein the lifting device (3) is arranged and designed in such a manner that a wheel (8) can be moved up or down the ramp (5) by means of the lifting device (3) wherein the lifting device (3) has a lever device, **characterized in that** the lever device comprises a toggle lever (50; 51) or a toggle lever arrangement (50, 51).

2. Wheel suspender according to Claim 1, **characterized in that** the lever device is designed in such a manner that there is self-locking in at least one operating sLate and/or **in that** the lever device can be fixed - preferably releasably again - in a self-locking position by overextension of the toggle lever (50; 51) or of the toggle lever arrangement (50, 51).

3. Wheel suspender according to either of Claims 1 and 2, **characterized in that** the lifting device has a motor drive and/or **in that** the lifting device has a crank drive and/or **in that** the lifting device has a hydraulic or pneumatic drive and/or **in that** the lifting device has a threaded drive.

4. Wheel suspender according to one of Claims 1 to 3, **characterized in that** the lifting device acts on the running surface of the wheel (8) to be lifted and/or **in that** the lifting device (3) acts on the axle of the wheel (8) to be lifted.

5. Wheel suspender according to Claim 4, **characterized in that** the lifting device (3) has a rotary sleeve (7) and/or a thrust wheel which, during a lifting operation, rolls along the running surface of the wheel (8) to be lifted.

6. Wheel suspender according to one of Claims 1 to 5, **characterized in that** the wheel suspender has at least one sliding foot and/or at least one wheel (31) for displacing the wheel suspender relative to the underlying surface (9).

7. Wheel suspender according to one of Claims 1 to 6, **characterized in that** the ramp (5) has a section - preferably of trough-shaped design - for receiving the wheel (8), and/or **in that** at least part of the ramp (5) is arranged in a manner such that it can pivot about an axis.

8. Wheel suspender according to one of Claims 1 to 7, **characterized in that** the wheel suspender is part of a weighing machine, in particular a bed weighing machine.

9. Bed weighing machine comprising at least one wheel suspender according to one of Claims 1 to 8.

10. Bed weighing machine according to Claim 9, **characterized in that** a plurality of - preferably four
- weighing devices (1) - preferably a respective weighing device (1) for each leg of the bed - are provided.

11. Bed weighing machine according to Claim 10, **characterized in that** each weighing device (1) has a wheel suspender.

12. Bed weighing machine according to either of Claims 10 and 11, **characterized in that** a plurality of weighing devices (1) for weighing an object are linked to one another - preferably without cables and/or **in that** the weighing devices (1) are connected to a processor (37) - preferably without cables.

## Revendications

1. Système lève-roue doté d'une rampe (5) et d'un dispositif de levage (3), le dispositif de levage (3) étant réalisé et disposé de telle sorte que le dispositif de levage (3) permet de faire monter ou faire descendre une roue (8) sur la rampe (5), le dispositif de levage (3) comportant un dispositif de levier, **caractérisé en ce que** le dispositif de levage comprend un levier à genou (50 ; 51) ou un agencement de levier à genou (50, 51).

2. Système lève-roue selon la revendication 1, **caractérisé en ce que** le dispositif de levier est réalisé de telle sorte qu'on permet un blocage automatique dans au moins un état de fonctionnement et/ou que le dispositif de levier peut être bloqué dans une position de blocage automatique - de préférence amovible à nouveau - en tendant le levier à genou (50 ; 51) ou l'agencement de levier à genou (50, 51).

3. Système lève-roue selon l'une quelconque des revendications 1 à 2, **caractérisé en ce que** le dispositif de levage comporte un entraînement motorisé et/ou que le dispositif de levage comporte un entraînement à manivelle et/ou que le dispositif de levage comporte un entraînement hydraulique ou pneumatique et/ou que le dispositif de levage comporte un entraînement fileté.

4. Système lève-roue selon l'une quelconque des revendications 1 à 3, **caractérisé en ce que** le dispositif de levage s'engrène au niveau de la surface de frottement de la roue (8) à lever et/ou que le dispositif de levage (3) s'engrène au niveau de l'essieu de la roue (8) à lever.

5. Système lève-roue selon la revendication 4, **caractérisé en ce que** le dispositif de levage (3) comporte une douille tournante (7) et/ou une roue de poussée qui se déroule et/ou se déroulent sur la surface de frottement de la roue à lever (8) pendant chaque processus de levage.

6. Système lève-roue selon l'une quelconque des revendications 1 à 5, **caractérisé en ce que** le système lève-roue comporte au moins un pied glissant et/ou au moins une roue (31) pour déplacer le système lève-roue par rapport à l'arrière-plan (9).

7. Système lève-roue selon l'une quelconque des revendications 1 à 6, **caractérisé en ce que** la rampe (5) comporte un segment - réalisé de préférence en forme d'auge - pour loger la roue (8) et/ou qu'au moins une partie de la rampe (5) est disposée de façon à pouvoir pivoter autour d'un axe.

8. Système lève-roue selon l'une quelconque des revendications 1 à 7, **caractérisé en ce que** le système lève-roue fait partie d'une balance, notamment d'un pèse-lit.

9. Fèse-lit doté d'au moins un système lève-roue selon l'une quelconque des revendications 1 à 8.

10. Pèse-lit selon la revendication 9, **caractérisé en ce que** plusieurs - de préférence quatre - dispositifs de pesée (1) sont prévus - de préférence respectivement un dispositif de pesée (1) par patte du lit.

11. Pèse-lit selon la revendication 10, **caractérisé en ce que** chaque dispositif de pesée (1) comporte un système léve-roue.

12. Pèse-lit selon l'une quelconque des revendications 10 ou 11, **caractérisé en ce que** plusieurs dispositifs de pesée (1) sont mis en réseau pour peser un objet - de préférence sans fil - et/ou que les dispositifs de pesée (1) sont raccordés - de préférence sans fil - à un dispositif de traitement (37).
